# EUROPÄISCHE PATENTSCHRIFT

(11) **EP 2 581 625 B1**
(45) Veröffentlichungstag und Bekanntmachung des Hinweises auf die Patenterteilung: **31.07.2019**
(21) Anmeldenummer: 12004212.2
(22) Anmeldetag: 01.06.2012
(51) Int. Cl.: F16F 9/05, B60G 17/052, B60G 17/056, B60G 17/048

(54) **Luftfederanordnung oder Luftfederdämpfer mit integrierter Ventilsteuerung**
Pneumatic spring assembly or pneumatic dampener with integrated valve control
Installation de ressort pneumatique ou amortisseur à ressort pneumatique avec commande de soupape intégrée

(30) Priorität: 30.09.2011 DE 102011114570
(43) Veröffentlichungstag der Anmeldung: 17.04.2013
(73) Patentinhaber: Vibracoustic CV Air Springs GmbH, 20099 Hamburg (DE)
(72) Erfinder: Weber, Michael, 21244 Buchholz (DE); Dehlwes, Stephan, 22844 Norderstedt (DE)
(74) Vertreter: Flügel Preissner Schober Seidel

(56) Entgegenhaltungen:
- EP-A2- 1 327 538
- DE-A1- 4 409 252
- DE-A1- 10 003 045
- DE-A1-102010 012 346

## Beschreibung

### Technisches Gebiet

Die vorliegende Erfindung betrifft eine Luftfederanordnung oder einen Luftfederdämpfer mit integrierter Ventilsteuerung zur Steuerung der Niveaulage eines Fahrzeugs oder einer Fahrerkabine, wobei die Luftfederanordnung oder der Luftfederdämpfer ein Abrollrohr und einen Deckel sowie einen Luftfederbalg umfassen, welcher gemeinsam mit dem Abrollrohr und dem Deckel eine Druckkammer mit Druckluft begrenzt, sowie ein Steuerventil zum Zuführen von Druckluft in die Druckkammer bzw. Abführen von Druckluft aus der Druckkammer, sowie eine Druckfedereinrichtung, deren eines Ende mit dem Abrollkolben oder dem Deckel und deren anderes Ende mit der Betätigungseinrichtung für das Steuerventil in Wirkverbindung steht, um dieses in Abhängigkeit vom Luftfederhub zu schalten.

Zur Verbesserung des Federkomforts von Fahrzeugen beziehungsweise Fahrerkabinen werden Luftfederaggregate eingesetzt, um ein gewünschtes Niveau des Fahrzeugs oder des Fahrerhauses bei unterschiedlicher Beladung oder Gewichtsbelastung konstant zu halten oder einstellbar zu verändern.

Dabei wird der Druck in der Luftkammer durch die Zufuhr von Druckluft beziehungsweise das Ablassen von Druckluft in Abhängigkeit vom Federhub verändert. Die hierfür benötigten Steuerventile sind vorwiegend außerhalb der Luftfeder angeordnet. Es sind aber auch Lösungen bekannt, bei denen die Steuerventile innerhalb der Luftfeder untergebracht sind. Die Unterbringung der Steuerventile innerhalb der Luftfeder hat sowohl fertigungstechnische als auch betriebliche Vorteile.

### Stand der Technik

In den Druckschriften DE 44 06 607 A1, DE 100 03 045 A1, DE 102 00 553 C1 und EP 2 275 703 A1, sind Steuerventile gezeigt, die innerhalb des Druckluftraums einer Luftfeder untergebracht sind. Die Steuerventile sind bei diesen Ausführungen am Abrollkolben für den Rollbalg der Luftfeder angebracht. Die Betätigung der Ventile erfolgt über Steuerelemente, die ebenfalls am Kolben angeordnet sind, abgesehen von der Druckschrift DE 44 06 607 A1, bei der zur Betätigung des Ventils eine Hülse vorgesehen ist, welche am Oberteil der Luftfeder befestigt ist. Diese Steuermechanismen bedingen eine bewegliche Luftzufuhr beziehungsweise -abfuhr über den Abrollkolben, was mit Platzproblemen verbunden ist.

Aus der DE 10 2010 012 346 A1 ist eine gattungsgemäße Luftfederanordnung mit integriertem Steuerventil bekannt, bei der das Steuerventil durch eine Druckfeder betätigt wird. Die Druckfeder ist hierzu mit ihrem einen Ende stimseitig am Abrollkolben oder am Deckel befestigt und steht mit ihrem anderen Ende mit dem Stößel des gegenüberliegend angeordneten Steuerventils in Wirkverbindung. Nachteilig an dieser Luftfederanordnungen ist, dass relativ lange Federwege zur Schaltung des Ventils vorgesehen sind.

### Darstellung der Erfindung

Der Erfindung liegt die Aufgabe zugrunde, eine gattungsgemäße Luftfederanordnung so weiterzubilden, dass sie konstruktiv einen einfachen und robusten Aufbau hat und über kurze Federwege schaltbar ist.

Die Lösung der gestellten Aufgabe erfolgt mit den Merkmalen des Anspruchs 1. Die Unteransprüche 2 bis 12 stellen vorteilhafte Ausbildungen des Erfindungsgegenstandes dar.

Gemäß der Erfindung ist vorgesehen, dass bei einer Luftfederanordnung mit integrierter Ventilsteuerung zur Steuerung der Niveaulage eines Fahrzeugs oder einer Fahrerkabine, wobei die Luftfederanordnung ein Abrollrohr und einen Deckel sowie einen Luftfederbalg, welcher gemeinsam mit dem Abrollrohr und dem Deckel eine Druckkammer mit Druckluft begrenzt, ein Steuerventil zum Zuführen von Druckluft in die Druckkammer bzw. Abführen von Druckluft aus der Druckkammer umfasst sowie eine Druckfedereinrichtung, deren eines Ende mit dem Abrollkolben oder Deckel und deren anderes Ende mit der der Betätigungseinrichtung für das Steuerventil in Wirkverbindung steht, um dieses in Abhängigkeit vom Luftfederhub zu schalten, dass die Druckfedereinrichtung zumindest zweistufig ausgebildet ist, mit einer dem Abrollkolben oder Deckel zugewandten Zentralfeder und einer dem Steuerventil zugewandten Steuerventilvorspannfeder, wobei die Zentralfeder stärker vorgespannt ist als die Steuerventilvorspannfeder.

Die Erfinder haben erkannt, dass sich durch den zweiteiligen Aufbau der Federeinrichtung und die unterschiedliche Auslegung der Federkräfte nicht nur die Federwege zum Schalten verkürzen lassen, sondern gleichzeitig noch eine Schaltreihenfolge einstellen lässt. Beim Einfahren der Luftfeder federt aufgrund der geringeren Vorspannung zunächst die Steuerventilvorspannfeder ein, während die Zentralfeder unverändert bleibt. Erst dann, wenn die Steuerventilvorspannfeder eine Anschlagposition erreicht, federt - in Abwesenheit von weiteren Federn mit geringeren Federkräften - auch die Zentralfeder ein.

In einer bevorzugten Ausführungsform der Erfindung ist vorgesehen, dass die Druckfedereinrichtung ein Führungsrohr umfasst, auch welchem die Zentralfeder und die Steuerventilvorspannfeder angeordnet sind. Damit ist eine sichere Führung der federn beim Ein- und Ausfedern ohne Verkanten gewährleistet.

Vorzugsweise ist das Führungsrohr zwischen dem Deckel und dem Abrollrohr in axialer Richtung frei beweglich gelagert. Bei dieser Ausgestaltung können auf bzw. an dem Führungsrohr Steuerungsmittel zum Schalten des Steuerventils vorgesehen sein. Die Anordnung aus Zentral und Steuerventilvorspannfeder dient in diesem Fall dazu, das Führungsrohr gegen das Abrollrohr und die Betätigungseinrichtung für das Steuerventil zu verspannen.

Gemäß einer bevorzugten Ausführungsform der Erfindung ist der Luftfeder ein hydraulischer Dämpfungskörper zugeordnet. Ein solcher Dämpfungskörper ist in der Regel zentrisch im Inneren der Luftfeder angeordnet. In diesem Fall wird das Führungsrohr bevorzugt so angeordnet, dass es den zylindrischen Dämpfungskörper umschließt und auf diesem gut gleiten kann.

In einem mittleren Bereich des Führungsrohres kann ein umlaufender Anschlag vorgesehen sein, an welchem sich die Federn jeweils mit ihren einander zugewandten Enden abstützen.

Zum Vorspannen der Federn sind an den beiden Enden des Führungsrohrs Spannelemente vorgesehen. Die Spannelemente sind auf dem Führungsrohr zwischen Anschlägen frei beweglich. Die Spannelemente begrenzen damit zwar den Ausfederweg der Federn, lassen aber ein weiteres Einfedern zu.

Die Vorspannung der Steuerventilvorspannfeder ist vorzugsweise so groß, dass unmittelbar nach Berühren des Betätigungsmittels für das Steuerventil der Schaltprozess vollständig ausgeführt wird und sich somit schnell und zuverlässig unabhängig von Toleranzen bei der Bemaßung der Feder oder dem Einbau der Feder ein definierter Schaltzustand einstellt.

Gemäß einer weiteren bevorzugten Ausführungsform der Erfindung ist das Steuerventil zweiteilig ausgebildet ist mit einem Einlassventil und einem Auslassventil. Vorzugsweise werden für das Einlass- und das Auslassventil Federventile verwendet. Über die Abstimmung der Federkräfte aller beteiligten Federn in der Luftfeder relativ zueinander lässt sich dann einfacher und zuverlässiger Weise eine selbst gesteuerte Schaltreihenfolge beim Ein- und Ausfahren der Luftfeder realisieren

Aus baulichen Gründen sind das Einlass- und das Auslassventil vorzugsweise im Bereich des Deckels der Luftfeder angeordnet sind. Das Führungsrohr weist bei dieser Ausgestaltung der Erfindung Steuerungsmittel sowohl für das Einlass- als auch für das Auslassventil auf. Die Steuerungsmittel sind vorzugsweise axial versetzt auf dem Führungsrohr angeordnet. Ein solches erstes Steuerungsmittel kann beispielsweise durch den radial abragenden Anschlag für die Zentralfeder und die Steuerventilvorspannfeder gebildet werden. Das zweite Steuerungsmittel kann an dem der Steuerventilvorspannfeder zugewandten Ende des Führungsrohrs vorgesehen sein.

Bei Anordnung beider Ventile an dem gleichen Ende der Luftfeder müssen sie so ausgebildet werden, dass das eine Ventil schließt, wenn das andere öffnet. Bei der oben beschriebenen Anordnung der Ventile im Bereich des Deckels sind das Auslassventil und das Einlassventil so ausgebildet sind, dass das Auslassventil bei eingefederter Stellung der Luftfeder geschlossen und das Einlassventil geöffnet ist. In gleicher Weise ist das Auslassventil bei ausgefederter Stellung der Luftfeder geöffnet und das Einlassventil ist geschlossen ist.

Das Einlassventil ist vorzugsweise zweistufig ausgebildet.

Die Ventile können aber auch im Bereich des Abrollkolbens angeordnet werden bzw. einander gegenüber, d. h. ein Ventil im Bereich des Abrollkolbens, das andere Ventil im Bereich des Deckels. Die daran angepasste Ausgestaltung der Steuerungselemente des Führungsrohrs ist dem Fachmann leicht möglich.

Gemäß einer weiteren bevorzugten Ausführungsform der Erfindung ist eine Hilfsdruckfeder zur Unterstützung der Bewegung des Führungsrohrs beim Ausfedern vorgesehen.

### Kurzbeschreibung der Zeichnung

Nachfolgend wird die Erfindung anhand der Zeichnung näher erläutert.

Es zeigen:
- Fig. 1: einen Längsschnitt durch eine erfindungsgemäße Luftfederanordnung mit eingezeichneten Federwegen;

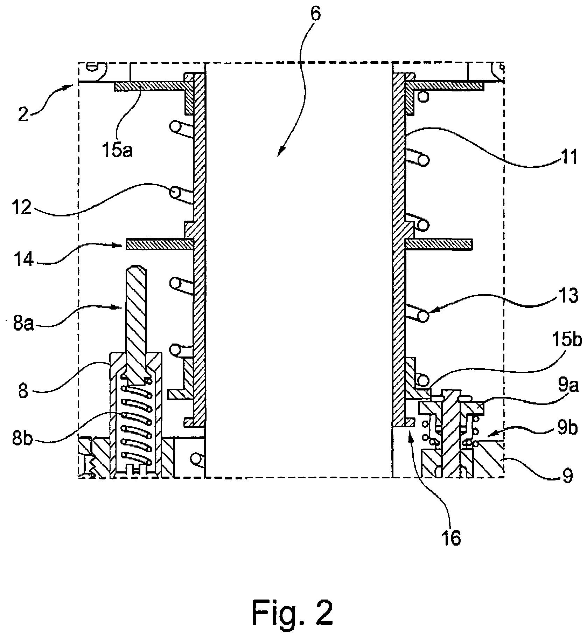

- Fig. 2: in einer Längsschnittdarstellung eine Detailzeichnung des unteren Bereichs der Luftfederanordnung aus Fig. 1;

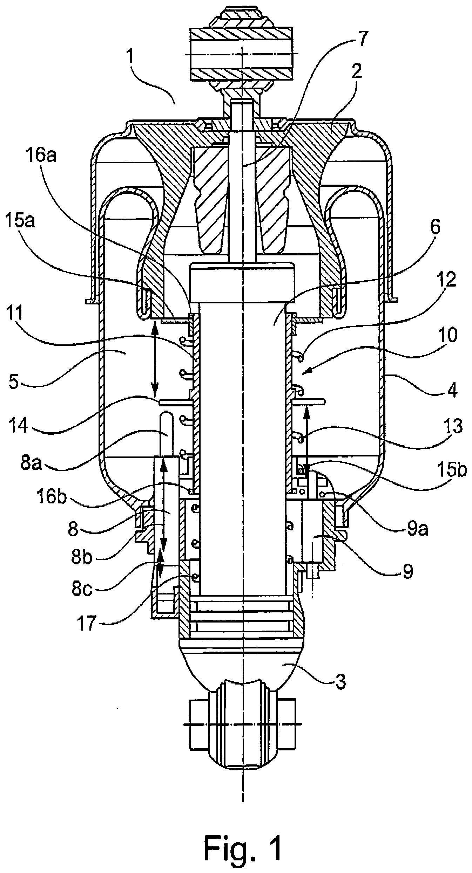

Man erkennt in Fig. 1 eine Luftfederanordnung 1 gemäß einer bevorzugten Ausführungsform der Erfindung, welche ein Abrollrohr 2 und einen Deckel 3 sowie einen Luftfederbalg 4 aus einem elastomeren Material umfassen. Das Abrollrohr 2, der Deckel 3 und der Luftfederbalg 4 begrenzen eine Druckkammer 5, welche mit Druckluft beaufschlagbar ist. Ohne Beschränkung der Allgemeinheit ist bei der dargestellten Ausführungsform ein hydraulischer Dämpferkörper 6 mit einer Kolbenstange 7 in die Luftfederanordnung 1 integriert. Der hydraulische Dämpferkörper 6 und die Kolbenstange 7 sind zentrisch im Inneren der Druckkammer 5 angeordnet. Der Luftfederbalg 4 ist mittels hier nicht näher bezeichneter Befestigungsmittel an dem Abrollkolben 2 einerseits und dem Deckel 3 andererseits befestigt. Dichtelemente sorgen für die Abdichtung der Druckkammer nach außen.

Im Falle eines Luftfederhubs rollt der Luftfederbalg 4 in an sich bekannter Weise an dem Abrollrohr 2 ab. Das Einleiten bzw. das Abführen der Druckluft erfolgt über ein integriertes Steuerventil, das in der dargestellten Ausführungsform zweiteilig als Lufteinlassventil 8 und einem hiervon getrennten Luftauslassventil 9 ausgebildet ist. Beide Ventile, die im Bereich des Deckels 3 angeordnet sind, sind in der dargestellten bevorzugten Ausführungsform als Federventile mit entsprechenden Betätigungsmitteln ausgebildet.

Zum Öffnen und Schließen der Ventile 8, 9 ist gemäß der Erfindung eine Druckfedereinrichtung 10 vorgesehen. Die Druckfedereinrichtung 10 ist gemäß der Erfindung zweistufig ausgebildet. Sie umfasst zwei in Reihe angeordnete Druckfedern, auf die weiter unten näher eingegangen wird. Weiterhin umfasst sie bei der dargestellten Ausführungsform der Erfindung ein Führungsrohr 11, das den Dämpferkörper 6 koaxial umgibt. Das Führungsrohr 11 kann auf dem Dämpferkörper 6 frei gleiten. Die Druckfedem umschließen das Führungsrohr 11 koaxial. Eine Zentralfeder 12 befindet sich im oberen Bereich des Führungsrohrs 11 und ist dem Abrollrohr 2 zugeordnet. Daran schließt sich eine Steuerventilvorspannfeder 13 an, die dem Auslassventil 9 zugeordnet ist. Beide Druckfedem sind in Reihe angeordnet und stützen sich mit ihren einander zugewandten Enden an einem in einem im mittleren Bereich des Führungsrohres 11 angeordneten radial abragenden Anschlag 14 ab. Die jeweils gegenüber liegenden Enden der Druckfedern werden durch Spannelemente 15a, 15b gehalten, die zu einer definierten Vorspannung der Druckfedem 12, 13 führen. Erfindungsgemäß ist die Zentralfeder 12 stärker vorgespannt als die Steuerventilvorspannfeder 13. An den beiden Enden des Führungsrohres 11 sind Endanschläge 16a, 16b vorgesehen. Die Spannelemente 15a, 15b sind zwischen den Endanschlägen 16a, 16b und dem radial abragenden Anschlag 14 auf dem Führungsrohr 11 in axialer Richtung frei verschiebbar angeordnet. Die Spannelemente 15a, 15b begrenzen damit zwar den Ausfederweg der Druckfedem 12, 13, lassen aber ein weiteres Einfedern zu.

Der im mittleren Bereich des Führungsrohrs angeordnete radial abragende Anschlag 14 ist so ausgebildet, dass er zugleich als Steuerungsmittel zum Betätigen des Ventilstößels 8a des Einlassventils 8 dient. Das Steuerungsmittel zum Betätigung des Auslassventils 9 wird durch das Spannelement 15b gebildet. An der unteren Seite das Spannelements 15b stützt sich ein Verschließmittel 9a für das Auslassventil 9 ab, das durch die Ventilfeder 9b des gegen das Spannelement gedrückt wird.

Beim Einfedern der Luftfederanordnung 1 bewegt sich das Abrollrohr 2 nach unten und übt Druck auf das Spannelement 15a aus. Das Führungsrohr 11 gleitet auf dem Dämpferkörper nach unten. Einen Anschlag für diese Bewegung bildet das Spannelement 15b, das sich auf der Betätigungseinrichtung 9a des Auslassventils 9 abstützt. Das Auslassventil bleibt geschlossen. Aufgrund der geringeren Vorspannung federt die Steuerventilvorspannfeder 13 ein, das Führungsrohr 11 bewegt sich weiter nach unten und gleitet dabei an dem Spannelement 15b vorbei.

Bei dieser Abwärtsbewegung erreicht schließlich der Anschlag 14 nach Überbrückung eines Leerlaufs den Stößel 8a des Einlassventils 8 und bewegt diesen gegen die Federkraft der Ventilfeder 8b nach unten. Das Einlassventil ist geöffnet. Bei weiterer Abwärtsbewegung wird eine zweite Stufe mit einer Ventilfeder 8c des Einlassventils betätigt.

Der Leerlauf ist bei der Ruhestellung der Luftfederanordnung 1 so bemessen, dass einerseits ein kurzer Schaltweg gewährleistet ist, andererseits aber die Ventiltätigkeit nicht, wie aus dem Stand der Technik bekannt, schon bei kleinsten Auslenkungen anspringt.

Erst wenn sich alle beschriebenen Federn 13, 8b, 8c auf Anschlag befinden übemimmt die Zentralfeder 12 die weitere Abfederung und federt ein.

Beim Ausfedern der Luftfederanordnung 1 bewegt sich das Abrollrohr 2 nach oben. Die Führungsrohr 11 bewegt sich unterstützt durch die Hilfsfeder 17 nach oben. Die Steuerventilvorspannfeder 13 federt aus, das Spannelement 15b gleitet auf dem Führungsrohr 11 nach unten in Richtung auf den Endanschlag 16b zu. Nach Überbrückung dieses Leerlaufs geht die Steuerventilvorspannfeder 13 auf Anschlag, das Spannelement 15b wird mit nach oben bewegt und gibt das Verschließelement 9a des Auslassventils 9 frei. Dieses wird durch die Kraft der Ventilfeder 9b geöffnet.

## Patentansprüche

1. Luftfederanordnung oder Luftfederdämpfer (1) mit integrierter Ventilsteuerung zur Steuerung der Niveaulage eines Fahrzeugs oder einer Fahrerkabine, umfassend
ein Abrollrohr (2) und einen Deckel (3) sowie einen Luftfederbalg (4), welcher gemeinsam mit dem Abrollrohr (2) und dem Deckel (3) eine Druckkammer (5) mit Druckluft begrenzt, ein Steuerventil (8, 9) zum Zuführen von Druckluft in die Druckkammer (5) bzw. Abführen von Druckluft aus der Druckkammer (5),
sowie eine Druckfedereinrichtung (10), deren eines Ende mit dem Abrollkolben (2) oder Deckel (3) und deren anderes Ende mit der Betätigungseinrichtung (8a, 9a) für das Steuerventil (8, 9) in Wirkverbindung steht, um dieses in Abhängigkeit vom Luftfederhub zu schalten, **dadurch gekennzeichnet, dass** die Druckfedereinrichtung (10) zumindest zweiteilig ausgebildet ist, mit einer dem Abrollkolben (2) oder dem Deckel (3) zugewandten Zentralfeder (12) und einer dem Steuerventil (8, 9) zugewandten Steuerventilvorspannfeder (13), wobei die Zentralfeder (12) stärker vorgespannt ist als die Steuerventilvorspannfeder (13).

2. Luftfederanordnung nach Anspruch 1, **dadurch gekennzeichnet, dass** die Druckfedereinrichtung (10) ein zwischen dem Abrollkolben (2) und dem Deckel (3) axial frei beweglich gelagertes Führungsrohr (11) umfasst, wobei die Zentralfeder (12) und die Steuerventilvorspannfeder (13) auf einem Führungsrohr (11) angeordnet sind.

3. Luftfederanordnung nach Anspruch 1 oder 2 **dadurch gekennzeichnet, dass** am oberen und unteren Ende des Führungsrohres (11) Spannelemente (15a, 15b) zum Vorspannen der Zentralfeder (12) und der Steuerventilvorspannfeder (13) vorgesehen sind.

4. Luftfederanordnung nach Anspruch 3, **dadurch gekennzeichnet, dass** die Spannelemente (15a, 15b) zwischen Endanschlägen (16a, 16b) auf dem Führungsrohr (11) frei beweglich sind.

5. Luftfederanordnung nach einem der Ansprüche 1 bis 4, **dadurch gekennzeichnet, dass** das Steuerventil (9) zweiteilig ausgebildet ist mit einem Einlassventil (8) und einem Auslassventil (9).

6. Luftfederanordnung nach Anspruch 5, **dadurch gekennzeichnet, dass** das Einlass- (8) und das Auslassventil (9) als Federventile ausbildet sind.

7. Luftfederanordnung nach Anspruch 5 oder 6, **dadurch gekennzeichnet, dass** das Einlass- (8) und Auslassventil (9) im Bereich des Deckels (3) angeordnet sind.

8. Luftfederanordnung nach einem der Ansprüche 5 bis 7, **dadurch gekennzeichnet, dass** das Auslassventil (9) und das Einlassventil (8) so ausgebildet sind, dass das Auslassventil (9) bei eingefederter Stellung der Luftfeder (1) geschlossen und das Einlassventil (8) geöffnet ist.

9. Luftfederanordnung nach einem der Ansprüche 5 bis 8, **dadurch gekennzeichnet, dass** das Auslassventil (9) und das Einlassventil (8) so ausgebildet sind, dass das Auslassventil (9) bei ausgefederter Stellung der Luftfeder (1) geöffnet und das Einlassventil (8) geschlossen ist.

10. Luftfederanordnung nach einem der Ansprüche 5 bis 9, **dadurch gekennzeichnet, dass** die Federkräfte der Zentralfeder (12) der Steuerventilvorspannfeder (13) und der Ventilfedern (8b, 8c, 9b) so eingestellt sind, dass beim Einfedern oder Ausfedern der Luftfeder (1) eine vorgegebene Schaltreihenfolge eingehalten wird.

11. Luftfederanordnung nach einem der Ansprüche 5 bis 10, **dadurch gekennzeichnet, dass** das Einlassventil (8) zweistufig ausgebildet ist.

12. Luftfederanordnung nach einem der Ansprüche 1 bis 11, **dadurch gekennzeichnet, dass** eine Hilfsdruckfeder (17) zur Unterstützung der Bewegung des Führungsrohrs (11) beim Ausfedern vorgesehen ist.

## Claims

1. Air spring assembly or air spring damper (1) with an integrated valve control for controlling a level position of a vehicle or of a driver's cab, comprising:
a rolling tube (2), a lid (3) and an air spring bellows (4) which, together with the rolling tube (2) and the lid (3), delimits a pressure chamber (5) with compressed air; a control valve (8, 9) for feeding compressed air into the pressure chamber (5) or for discharging compressed air from the pressure chamber (5); and
a compression spring device (10), a first end of the compression spring device (10) being operatively connected to the rolling tube (2) or the lid (3), and a second end of the compression spring device (10) being operatively connected to the actuation device (8a, 9a) of the control valve (8, 9) in order to switch the control valve (8, 9) depending on an air spring stroke, **characterised in that** the compression spring device (10) is configured with at least two parts including a central spring (12) facing towards the rolling tube (2) or the lid (3) and a control valve biasing spring (13) facing towards the control valve (8, 9), the central spring (12) being biased to a greater extent than the control valve biasing spring (13).

2. The air spring assembly according to claim 1, **characterised in that** the compression spring device (10) has a guide tube (11) mounted in an axially freely movable manner between the rolling tube (2) and the lid (3), the central spring (12) and the control valve biasing spring (13) being disposed on the guide tube (11).

3. Air spring assembly according to claim 1 or 2, **characterised in that** biasing members (15a, 15b) for biasing the central spring (12) and the control valve biasing spring (13) are disposed at the upper end and at the lower end of the guide tube (11).

4. Air spring assembly according to claim 3, **characterised in that** the biasing members (15a, 15b) are freely movable between end stops (16a, 16b) on the guide tube (11).

5. Air spring assembly according to any one of claims 1 to 4, **characterised in that** the control valve (9) is configured in two parts including an inlet valve (8) and an outlet valve (9).

6. Air spring assembly according to claim 5, **characterised in that** the inlet valve (8) and the outlet valve (9) are configured as spring valves.

7. Air spring assembly according to claim 5 or 6, **characterised in that** the inlet valve (8) and the outlet valve (9) are disposed in the region of the lid (3).

8. Air spring assembly according to any one of claims 5 to 7, **characterised in that** the outlet valve (9) and the inlet valve (8) are configured with the outlet valve (9) closed and the inlet valve (8) open in a compressed position of the air spring (1).

9. Air spring assembly according to any one of claims 5 to 8, **characterised in that** the outlet valve (9) and the inlet valve (8) are configured with the outlet valve (9) open and the inlet valve (8) closed in an expanded position of the air spring (1).

10. Air spring assembly according to any one of claims 5 to 9, **characterised in that** the spring forces of the central spring (12), the control valve biasing spring (13) and the valve springs (8b, 8c, 9b) are set with a predetermined switching order maintained during compression or expansion of the air spring (1).

11. Air spring assembly according to any one of claims 5 to 10, **characterised in that** the inlet valve (8) has a two-stage configuration.

12. Air spring assembly according to any one of claims 1 to 11, **characterised in that** an auxiliary compression spring (17) configured to assist the movement of the guide tube (11) during expansion of the air spring (1).

## Revendications

1. Agencement de ressort pneumatique ou amortisseur pneumatique (1) avec commande de soupape intégrée pour la commande de l'assiette d'un véhicule ou d'une cabine de conducteur, incluant
un tube déroulant (2) et un couvercle (3) ainsi qu'un soufflet de ressort pneumatique (4) qui délimite, conjointement avec le tube déroulant (2) et avec le couvercle (3), une chambre à pression (5) avec de l'air comprimé, une soupape de commande (8, 9) pour l'admission d'air comprimé dans la chambre à pression (5) ou respectivement pour évacuer de l'air comprimé hors de la chambre à pression (5),
ainsi qu'un dispositif à ressort de compression (10) dont une extrémité est en coopération avec le piston déroulant (2) ou avec le couvercle (3) et dont l'autre extrémité est en coopération avec le moyen d'actionnement (8a, 9a) pour la soupape de commande (8, 9), afin de commuter celle-ci en dépendance du débattement du ressort pneumatique,
**caractérisé en ce que** le dispositif à ressort de compression (10) est réalisé en au moins deux parties, avec un ressort central (12) tourné vers le piston déroulant (2) ou vers le couvercle (3), et un ressort de précontrainte pour soupape de commande (13) tourné vers la soupape de commande (8, 9), dans lequel le ressort central (12) est plus fortement précontraint que le ressort de précontrainte pour soupape de commande (13).

2. Agencement de ressort pneumatique selon la revendication 1, **caractérisé en ce que** le dispositif à ressort de compression (10) inclut un tube de guidage (11) monté axialement et en déplacement libre entre le piston déroulant (2) et le couvercle (3), et le ressort central (12) et le ressort de précontrainte pour soupape de commande (13) sont agencés sur un tube de guidage (11).

3. Agencement de ressort pneumatique selon la revendication 1 ou 2, **caractérisé en ce qu'**il est prévu des éléments de tensionnement (15a, 15b) à l'extrémité supérieure et à l'extrémité inférieure du tube de guidage (11), pour précontraindre le ressort central (12) et le ressort de précontrainte pour soupape de commande (13).

4. Agencement de ressort pneumatique selon la revendication 3, **caractérisé en ce que** les éléments de tensionnement (15a, 15b) sont librement déplaçables entre des butées de fin de course (16a, 16b) sur le tube de guidage (11).

5. Agencement de ressort pneumatique selon l'une des revendications 1 à 4, **caractérisé en ce que** la soupape de commande (9) est réalisée en deux parties avec une soupape d'admission (8) et une soupape d'échappement (9).

6. Agencement de ressort pneumatique selon la revendication 5, **caractérisé en ce que** la soupape d'admission (8) et la soupape d'échappement (9) sont réalisées comme des soupapes à ressort.

7. Agencement de ressort pneumatique selon la revendication 5 ou 6, **caractérisé en ce que** la soupape d'admission (8) et la soupape d'échappement (9) sont agencées dans la région du couvercle (3).

8. Agencement de ressort pneumatique selon l'une des revendications 5 à 7, **caractérisé en ce que** la soupape d'échappement (9) et la soupape d'admission (8) sont réalisées de telle façon que, dans la position rétractée du ressort pneumatique (1), la soupape d'échappement (9) est fermée et la soupape d'admission (8) est ouverte.

9. Agencement de ressort pneumatique selon l'une des revendications 5 à 8, **caractérisé en ce que** la soupape d'échappement (9) et la soupape d'admission (8) sont réalisées de telle façon que, dans la position déployée du ressort pneumatique (1), la soupape d'échappement (9) est ouverte et la soupape d'admission (8) est fermée.

10. Agencement de ressort pneumatique selon l'une des revendications 5 à 9, **caractérisé en ce que** les forces élastiques du ressort central (12), du ressort de précontrainte pour soupape de commande (13), et des ressorts de soupape (8b, 8c, 9b) sont réglées de telle manière que lors de la rétraction ou du déploiement du ressort pneumatique (1) une succession de commutation prédéterminée est respectée.

11. Agencement de ressort pneumatique selon l'une des revendications 5 à 10, **caractérisé en ce que** la soupape d'admission (8) est réalisée à deux étages.

12. Agencement de ressort pneumatique selon l'une des revendications 1 à 11, **caractérisé en ce qu'**il est prévu un ressort de compression auxiliaire (17) pour soutenir le déplacement du tube de guidage (11) lors du déploiement.
